# EUROPÄISCHE PATENTSCHRIFT

(11) **EP 1 480 025 B1**
(45) Veröffentlichungstag und Bekanntmachung des Hinweises auf die Patenterteilung: **22.11.2006**
(21) Anmeldenummer: 04101781.5
(22) Anmeldetag: 28.04.2004
(51) Int. Cl.: G01G 19/12

(54) **Vorrichtung zur Messung der Gewichtskraft eines Ballens**
Device for determining the weight of a bale
Dispositif pour mesurer le poids d'une balle de foin

(30) Priorität: 17.05.2003 DE 10322333
(43) Veröffentlichungstag der Anmeldung: 24.11.2004
(73) Patentinhaber: DEERE & COMPANY, Moline, Illinois 61265-8098 (US)
(72) Erfinder: Viaud, Jean, 70100 Gray (FR); Biziorek, Stephane, 70600 Champlitte (FR); Pessard, Mickael, 49640 Daumeray (FR); Guiet, Lionel, 70100 Gray (FR)
(74) Vertreter: Holst, Sönke

(56) Entgegenhaltungen:
- DE-A- 2 734 562
- GB-A- 973 783
- US-A- 5 866 855
- US-B1- 6 457 295

## Beschreibung

Die Erfindung betrifft eine Maschine zur Bildung und/oder Verarbeitung von Ballen, umfassend:
eine Presskammer, in der Ballen aus Erntegut herstellbar sind,
eine Vorrichtung zum Umwickeln der Ballen,
eine Transporteinrichtung zum Transport der Ballen innerhalb der Maschine, die zwischen einer Ballenaufnahmeposition, in der sie
einen in der Presskammer hergestellten Ballen aufnimmt, und einer Ballenumwicklungsposition bewegbar ist,
und eine Vorrichtung zur Messung der Gewichtskraft eines Ballens, die eine Messeinrichtung zur Erfassung einer durch die Gewichtskraft des Ballens beeinflussten Messgröße aufweist.

Im Stand der Technik sind verschiedene Einrichtungen zur Messung der Masse eines Ballens aus gepresstem landwirtschaftlichem Erntegut bekannt.

Es wurde beispielsweise vorgeschlagen (DE 44 36 128 A, DE 198 35 163 A, US 4 742 880 A, US 5 384 436 A und US 5 742 010 A), einen fertiggestellten Ballen aus der Presskammer oder aus einer Wickelvorrichtung einer Pressen-Umwickler-Kombination (DE 199 10 555 A, US 6 457 295 B) hinauszufördern, auf eine Auflagefläche zu verbringen und dort bei einem sich im ruhenden oder bewegten Zustand befindlichen Ballen seine Gewichtskraft zu bestimmen, indem die Kraft erfasst wird, die er auf die Auflagefläche ausübt. Da die Ballen relativ hohe Massen haben, ist ein Anhalten schwer möglich, während eine Messung der Gewichtskraft bei bewegtem Ballen einem hohen Messfehler unterliegt.

In der DE 195 43 343 A wird vorgeschlagen, die an den Achsen und der Zugdeichsel einer Ballenpresse wirkenden Gewichtskräfte zu erfassen. Anhand der Änderung der Kräfte beim Auswerfen eines Ballens wird die Gewichtskraft des hergestellten Ballens berechnet. Es ist eine höhere Anzahl von Sensoren und eine ausgefeilte Rechentechnik erforderlich, um brauchbare Messwerte zu erhalten.

Die US 5 866 855 A und die DE 27 34 562 A beschreiben Waagen für Fördergurte. In der GB 973 783 A wird vorgeschlagen, einlaufendes Fasermaterial in einen Behälter zu füllen, der dann, wenn das gemessene Gewicht des Behälters einem Sollgewicht entspricht, auf Schienen nach unten in eine Sammelposition gleitet.

Das der Erfindung zu Grunde liegende Problem wird darin gesehen, eine einfache und zuverlässige Messeinrichtung zur Erfassung der Gewichtskraft eines Ballens bereitzustellen, welche die oben erwähnten Nachteile nicht oder in einem verminderten Ausmaß aufweist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Maschine zur Herstellung und/oder Verarbeitung von Ballen, ist eine Ballenpressen- und Ballenumwickler-Kombination und umfasst eine Transporteinrichtung, die eingerichtet ist, den Ballen von der Presskammer, in der der Ballen hergestellt wird, in die Wickelposition zu verbringen. Es wird vorgeschlagen, dass eine Messeinrichtung die Gewichtskraft des auf der Transporteinrichtung angeordneten Ballens erfasst. Auf diese Weise wird eine bereits vorhandene Transporteinrichtung zur Messung der Gewichtskraft des Ballens genutzt. Die Messeinrichtung kann an einer relativ geschützten Stelle der Maschine angeordnet werden.

Die Transporteinrichtung kann beliebiger Art sein. Es kann sich um einen verfahrbaren oder an einem beweglichen Gestänge angebrachten Schlitten handeln, auf dem der Ballen aufliegt. Es wäre zum Transport des Ballens auch ein beliebiger anderer, angetriebener Förderer denkbar, der beispielsweise einen Greifer, einen Fördergurt oder Förderwalzen aufweisen könnte. Die Transporteinrichtung kann aktiv angetrieben werden; der Ballen könnte aber auch nur durch die Schwerkraft transportiert werden, wenn ein hinreichender Höhenunterschied vorhanden ist.

Vorzugsweise stützt sich die Transporteinrichtung über Abstützelemente an einer mit der Maschine verbundenen Abstützeinrichtung ab. Die Abstützelemente bewegen sich mit der Transporteinrichtung entlang der Abstützeinrichtung, rollen beispielsweise an ihnen ab. Die Messeinrichtung ist zwischen der Abstützeinrichtung und der eigentlichen Maschine, z. B. ihrem Fahrgestell, angeordnet. Die Messeinrichtung erzeugt somit eine Information über die Gewichtskraft der Transporteinrichtung und des sich darauf befindenden Ballens. Die Gewichtskraft der Transporteinrichtung ist bekannt oder kann gemessen werden, so dass sich die Gewichtskraft des Ballens durch geeignete Rechenvorgänge ermitteln lässt. Ein Vorteil liegt darin, dass sich die Messeinrichtung nicht mit der Transporteinrichtung mitbewegen muss, was die Datenübertragung von der Messeinrichtung auf eine sich nicht mit der Transporteinrichtung mitbewegende Auswertungs-, Speicher- und/oder Anzeigeeinrichtung erleichtert.

In einer bevorzugten Ausführungsform erstreckt sich die Abstützeinrichtung, bzw. ein mit der Messeinrichtung zusammenwirkender Teilbereich der Abstützeinrichtung, nur über einen Teil des Bewegungsbereichs der Transporteinrichtung. Die Gewichtskraft der Transporteinrichtung mit dem sich darauf befindlichen Ballen wird somit während des Transports erfasst, wobei die Transporteinrichtung zur Messung angehalten werden kann oder sich während der Messung weiterbewegt. In einer anderen Ausführungsform erstreckt sich die Abstützeinrichtung über den gesamten Bewegungsbereich der Transporteinrichtung.

Die Messeinrichtung kann eingerichtet sein, die Gewichtskraft, welche die Transporteinrichtung und der Ballen auf die Abstützeinrichtung ausüben, direkt zu messen. Dazu können an beiden Enden der Abstützeinrichtung oder an beliebigen Positionen dazwischen entsprechende Kraftmesszellen vorgesehen werden.

Alternativ erfasst die Messeinrichtung das Drehmoment, das die Transporteinrichtung und der Ballen erzeugen. Dazu ist die Abstützeinrichtung um eine horizontale Achse, die sich in der Regel quer zur Fahrtrichtung bzw. Bewegungsrichtung der Transporteinrichtung erstreckt, schwenkbar an der Maschine gelagert. Im Abstand von der Schwenkachse ist die Messeinrichtung zwischen der Abstützeinrichtung und der Maschine angeordnet. Durch die Messung des Drehmoments kann die Anzahl zu verwendender Kraftmesszellen verringert werden. So kann eine einzige Messzelle ausreichen, wenn die Abstützelemente auf beiden Seiten der Transporteinrichtung untereinander starr verbunden sind.

In den Zeichnungen sind drei nachfolgend näher beschriebene Ausführungsbeispiele der Erfindung dargestellt. Es zeigt:
- Fig. 1: eine schematische Seitenansicht einer Maschine zum Herstellen und Umwickeln von Ballen, die mit einer erfindungsgemäßen Vorrichtung zur Messung der Gewichtskraft der Ballen ausgestattet ist, wobei sich die Transporteinrichtung in einer Ballenempfangsposition befindet,
- Fig. 2: eine Ansicht der Maschine aus Figur 1, in der sich die Transporteinrichtung in einer Ballenwickelposition befindet.
- Fig. 3: einen Querschnitt durch die Maschine entlang der Linie 3-3 der Figur 1, in dem die Lagerung der Transporteinrichtung am Rahmen der Maschine dargestellt ist,
- Fig. 4: eine schematische Seitenansicht der Lagerung der Transporteinrichtung am Rahmen der Maschine mit einer ersten Ausführungsform der Messeinrichtung,
- Fig. 5: eine schematische Seitenansicht der Lagerung der Transporteinrichtung am Rahmen der Maschine mit einer zweiten Ausführungsform der Messeinrichtung,
- Fig. 6: eine perspektivische Ansicht einer Lagerung der Transporteinrichtung am Rahmen der Maschine mit einer dritten Ausführungsform der Messeinrichtung, und
- Fig. 7: einen Schnitt durch die Lagerung der Figur 6 entlang der Linie 7-7.

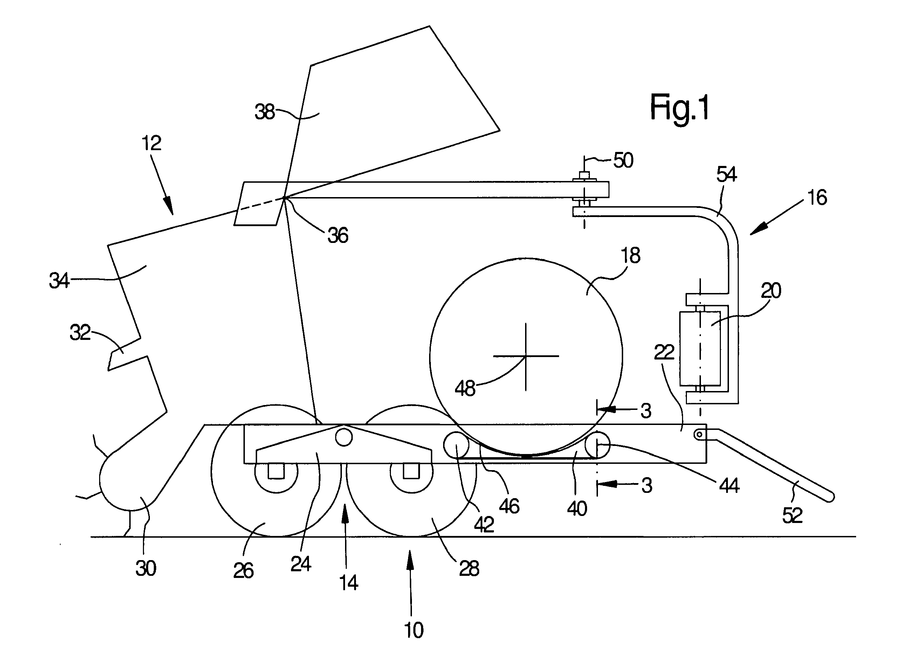

Die Figur 1 zeigt eine Seitenansicht einer Maschine 10 zum Herstellen und Umwickeln von Ballen. Sie umfasst eine Rundballenpresse 12, die auf einem Fahrgestell 14 angebracht ist, das außerdem eine Vorrichtung zum Umwickeln von Rundballen 16 mit Folie 20 trägt. Das Fahrgestell 14 umfasst zwei Längsträger 22, die sich an beiden Seiten der Maschine 10 in Vorwärtsfahrtrichtung erstrecken. Im vorderen Bereich der Längsträger 22 ist eine Tandemachse 24 angeordnet, die sich auf einem Paar vorderer Räder 26 und einem Paar hinterer Räder 28 abstützt. Die Maschine 10 wird durch eine Deichsel 32 mit einem Traktor verbunden, der sie über ein Feld zieht.

Die Rundballenpresse 12 ist an sich bekannter Bauart und kann Ballen aus Erntegut herstellen, das der Rundballenpresse 12 durch eine Pick-Up 30 zugeführt wird. Die Rundballenpresse 12 weist ein mit dem Fahrgestell 14 fest verbundenes vorderes Gehäuseteil 34 und ein um eine obere Schwenkachse 36 aufklappbares hinteres Gehäuseteil 38 auf. Beide Gehäuseteile 34, 38 bilden in geschlossenem Zustand einen variablen oder konstanten, nicht dargestellten Pressraum zur Herstellung von Rundballen. In Figur 1 ist das hintere Gehäuseteil 38 in aufgeklappter Stellung nach dem Auswurf eines Ballens 18 gezeigt.

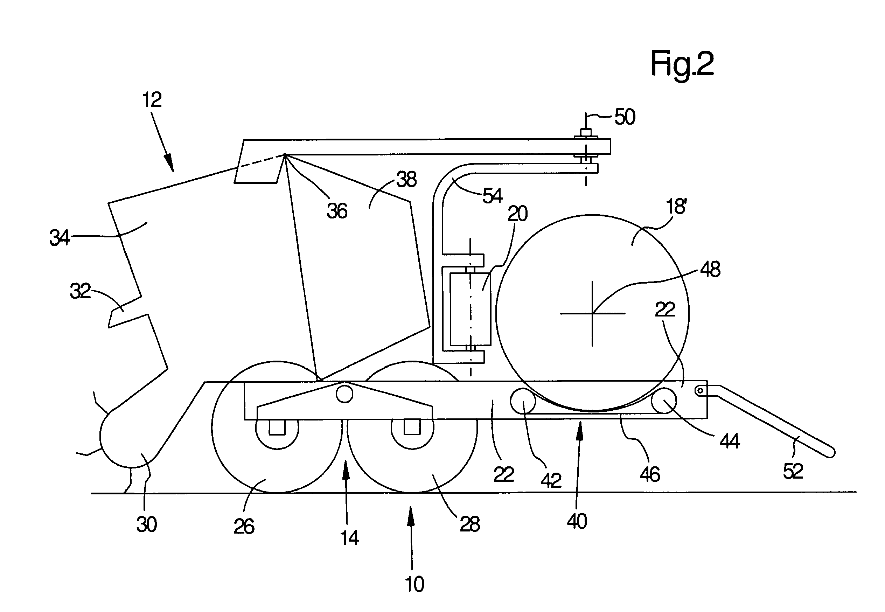

Der von der Rundballenpresse 12 erzeugte Ballen 18 rollt auf geeigneten Elementen aus dem vorderen Gehäuseteil 34 nach hinten hinaus und gelangt auf eine Transporteinrichtung 40, die eine vordere Walze 42 und eine hintere Walze 44 umfasst, um die eine Anzahl von seitlich nebeneinander angeordneten Transportbändern 46 umläuft, auf denen der Ballen 18 aufliegt. Die Transporteinrichtung 40 ist insgesamt zwischen der in Figur 1 dargestellten Ballenaufnahmeposition und der in Figur 2 gezeigten Ballenumwicklungsposition beweglich.

Befindet sich der Ballen 18', wie in Figur 2 dargestellt, in der Ballenumwicklungsposition, wird er durch die Transporteinrichtung 40 um seine Zylinderachse 48 gedreht, indem die Walzen 42, 44 in an sich bekannter Weise durch geeignete Motoren in Drehung versetzt werden. Dabei wird der Ballen 18' durch eine um eine vertikale Achse 50 umlaufende, an einem Arm 54 befestigte Rolle mit der Folie 20 eingewickelt. Damit der folienumwickelte Ballen 18' nicht bei der Abgabe von der Transporteinrichtung aus relativ großer Höhe auf den Boden fällt, rollt der Ballen 18' schließlich auf einer Abrollvorrichtung 52 auf den Erdboden hinab. Wird das hintere Gehäuseteil 38 der Ballenpresse 12 nach oben geschwenkt, wird der Arm 54 aus Platzgründen nach hinten gedreht, wie in der Figur 1 dargestellt.

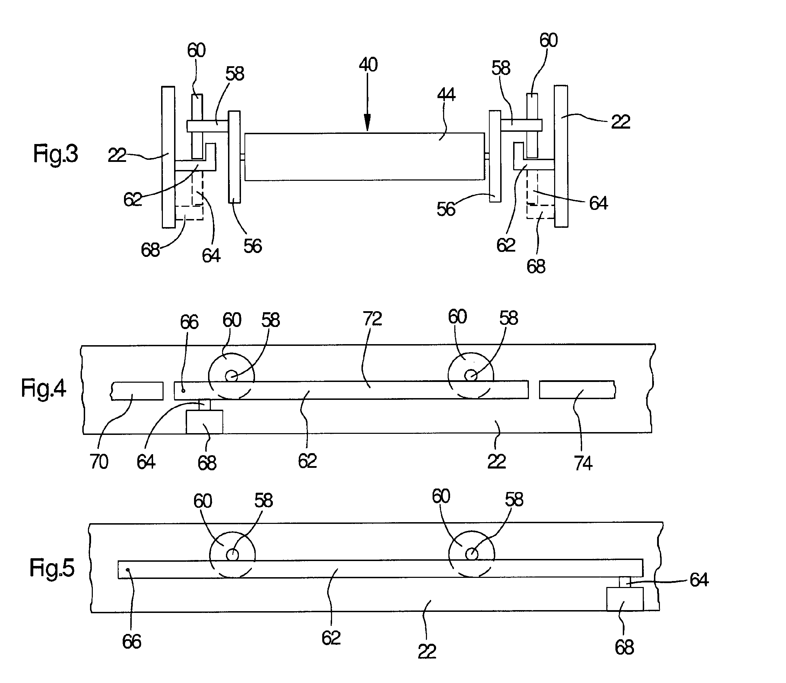

Die Anbringung der Transporteinrichtung 40 an den Längsträgern 22 ist in der Figur 3 detaillierter dargestellt, die einen Schnitt entlang der Linie 3-3 der Figur 1 zeigt. Die Walzen 42 und 44 sind drehbar an Trägern 56 gelagert, welche sich parallel zu den Längsträgern 22 erstrecken. Die beiden Träger 56 sind untereinander durch (nicht eingezeichnete) Querstreben verbunden und tragen jeweils vier (s. Figur 4 und 5) sich horizontal nach außen erstreckende Achsen 58, an denen Abstützelemente 60 in Form von Rädern drehbar gelagert sind. Die Abstützelemente 60 könnten auch starr mit den Achsen 58 verbunden sein, die dann wiederum drehbar an den Trägern 56 befestigt wären. An den Innenseiten der Längsträger 22 sind sich in Längsrichtung der Längsträger 22 erstreckende Abstützeinrichtungen 62 mit rechtwinkligem Profil angebracht, auf denen die Abstützelemente 60 abrollen.

Die Bewegung der Transporteinrichtung 40 zwischen den in Figur 1 und Figur 2 dargestellten Positionen kann durch einen in den Figuren nicht eingezeichneten Hydraulikzylinder oder einen anderen Motor bewerkstelligt werden. Es wäre für diesen Zweck auch ein Rotations-Antrieb der Abstützelemente 60 denkbar. Der Antrieb der Walzen 42, 44 kann durch einen an den Trägern 56 angebrachten Hydromotor erfolgen. Es sind auch Ausführungsformen der Maschine 10 denkbar, bei denen sich ein rotativer Antrieb der Walzen 42, 44 erübrigt.

Die Figur 4 zeigt eine erste Ausführungsform einer Messeinrichtung 64 zur Erfassung der Gewichtskraft bzw. Masse des Ballens 18. Die Abstützeinrichtungen 62 sind in Teilbereiche 70, 72, 74 unterteilt. Vor und hinter einem mittleren Teilbereich 72 der Abstützeinrichtung 62 ist ein vorderer Teilbereich 70 und ein hinterer Teilbereich 74 der Abstützvorrichtung 62 vorhanden. Diese vorderen und hinteren Teilbereiche 70, 74 der Abstützvorrichtung 62 sind starr mit dem Längsträger 22 verbunden.

Der mittlere Teilbereich 72 der Abstützeinrichtung 62 hat eine Länge, die etwas größer als der Abstand der Achsen 58 ist, und ist an einem ersten (vorderen oder hinteren) Ende um eine horizontal und quer zur Fahrtrichtung verlaufende Schwenkachse 66 schwenkbar am Längsträger 22 angelenkt, ansonsten aber frei beweglich. Er stützt sich über die Messeinrichtung 64 auf einer vom Längsträger 22 nach innen ragenden Konsole 68 ab. Befinden sich beide Abstützelemente 60 der Transporteinrichtung 40 somit oberhalb der Abstützeinrichtung 62, erzeugen sie an der Schwenkachse 58 ein Drehmoment, das in der Messeinrichtung 64 eine Kraft erzeugt, die durch die Messeinrichtung 64 erfasst und einer (nicht dargestellten) Auswertungseinrichtung zugeführt wird. Durch Vergleich mit dem Messwert einer leeren Transporteinrichtung 40 kann die Gewichtskraft des Ballens 18 ermittelt werden.

Der Auswertungseinrichtung kann auch ein Messwert eines Sensors zugeführt werden, welcher die Position der Transporteinrichtung 40 erfasst oder beim Erreichen einer vorbestimmten Position ein Signal abgibt, so dass eine Information vorliegt, an welcher Stelle der Abstützeinrichtung 62 sich die Transporteinrichtung 40 jeweils befindet. Diese Information könnte aber auch aus den Signalen der Messeinrichtung 64 abgeleitet werden. Die Transporteinrichtung 40 kann zur Messung gestoppt werden, wobei zwecks einer Verbesserung der Messgenauigkeit beim Überfahren unebenen Geländes eine Erfassung der Messwerte der Messeinrichtung 64 für eine längere Zeit und eine Mittelwertbildung erfolgen kann. Alternativ wird die Transporteinrichtung 40 kontinuierlich bewegt und aus den zeitabhängig ermittelten und abgespeicherten Messwerten, die vorzugsweise mit der erwähnten Information über die Position der Transporteinrichtung kombiniert werden, durch eine Recheneinrichtung die Gewichtskraft abgeleitet. Auf diese Weise wird die Gewichtskraft des Ballens 18 bestimmt. Sie wird vorzugsweise mittels einer Anzeigevorrichtung in der Kabine des Traktors zur Anzeige gebracht und auf einer portablen Speichereinrichtung abgespeichert.

Die Messeinrichtung 64 könnte mit der Lagerung der Abstützeinrichtung 62 an der Schwenkachse 66 gemeinsam in einem schützenden Gehäuse angeordnet werden, da sie sich relativ nahe an der Schwenkachse 66 befindet. In einer anderen Ausführungsform könnte die Messeinrichtung 64 aber auch an dem von der Schwenkachse 66 abgewandten Ende der Abstützeinrichtung 62 angeordnet sein.

Die Figur 5 zeigt die Anbringung der Messeinrichtung 64 in einer anderen Ausführungsform der Erfindung. Hier erstreckt sich die Abstützeinrichtung 62 über den gesamten Bewegungsbereich der Transporteinrichtung 40. Die Abstützeinrichtung 62 ist an einem (hinteren oder vorderen) Ende um eine horizontal und quer zur Fahrtrichtung verlaufende Schwenkachse 66 schwenkbar am Längsträger 22 befestigt und stützt sich am anderen Ende (oder an einer beliebigen anderen Stelle entlang der Abstützeinrichtung 62) über die Messeinrichtung 64 und die Konsole 68 am Längsträger 22 ab. Auch hier erfasst die Messeinrichtung 64 das von der Transporteinrichtung 40 erzeugte und von der Gewichtskraft des Ballens 18 erzeugte Drehmoment, wobei die weitere Auswertung wie oben beschrieben erfolgen kann.

Bei den beiden dargestellten Ausführungsformen könnten im Übrigen an beiden Enden der Abstützeinrichtung 62 Messeinrichtungen 64 angeordnet sein, um anstelle des Drehmoments die Gewichtskraft der Transporteinrichtung 40 und des darauf angeordneten Ballens 18 zu erfassen.

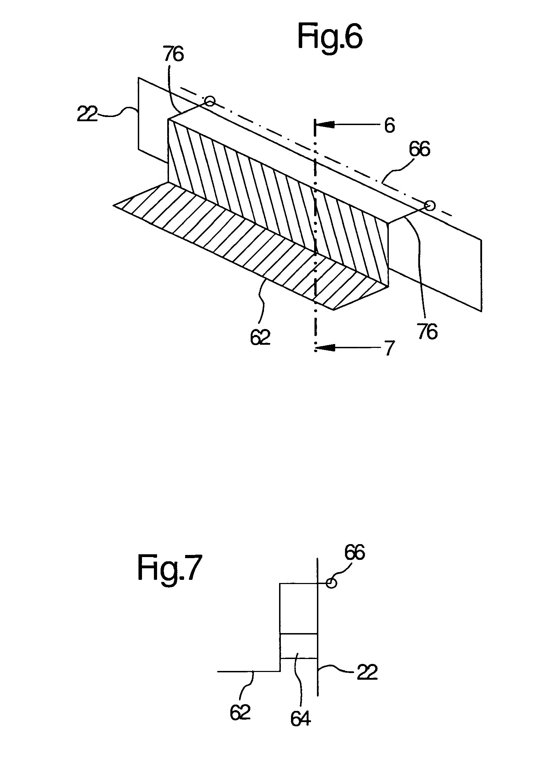

Schließlich zeigen die Figuren 6 und 7 eine dritte Ausführungsform der Anbringung der Messeinrichtung 64. Am Längsträger 22 ist die Abstützeinrichtung 62 um eine horizontale, sich jedoch in Fahrtrichtung und Längsrichtung des Längsträgers 22 erstreckende Schwenkachse 66 angelenkt. Die Abstützeinrichtung 62 ist rechtwinklig und hat einen unteren, horizontalen Schenkel, der sich vom Längsträger 22 nach innen erstreckt, sowie einen an der Innenseite des horizontalen Schenkels nach oben erstreckenden vertikalen Schenkel, der wiederum durch Verbindungselemente 76 am Längsträger 22 um die Schwenkachse 66 schwenkbar angelenkt ist. Die Messeinrichtung 64 ist zwischen dem vertikalen Schenkel und dem Längsträger 22 angeordnet und erfasst das Drehmoment, das die Transporteinrichtung 40, deren Aufbau der in Figur 3 und 4 gezeigten Ausführungsform entspricht, mit dem darauf angeordneten Ballen 18 auf die Abstützeinrichtung 62 ausübt. Die Abstützeinrichtung 62 kann sich über die gesamte Länge des Bewegungsbereichs der Transporteinrichtung 40 oder einen Teilbereich davon erstrecken.

In der Regel sind an beiden Seiten der Längsträger 22 mit einer Messeinrichtung 64 versehene Abstützeinrichtungen 62 angeordnet, so dass an seitlichen Hängen auftretende Messfehler vermieden werden können. Es wäre aber auch denkbar, die Abstützeinrichtungen 62 auf beiden Seiten der Maschine 10 mechanisch zu verbinden, beispielsweise durch eine hinreichend weit unten angeordnete Querstrebe, die ein Überfahren mit der Transporteinrichtung 40 ermöglicht. Dann ist nur eine einzige Messzelle für die Messeinrichtung 64 erforderlich. Es können auch separate, entlang der Fahrtrichtung und/oder in Querrichtung arbeitende Neigungssensoren zu einer Verminderung der Messfehler verwendet werden.

## Patentansprüche

1. Maschine (10) zur Bildung und/oder Verarbeitung von Ballen (18), umfassend:
eine Presskammer (12), in der Ballen (18) aus Erntegut herstellbar sind,
eine Vorrichtung (16) zum Umwickeln der Ballen (18),
eine Transporteinrichtung (40) zum Transport der Ballen (18) innerhalb der Maschine (10), die zwischen einer Ballenaufnahmeposition, in der sie einen in der Presskammer hergestellten Ballen (18) aufnimmt, und einer Ballenumwicklungsposition bewegbar ist,
und eine Vorrichtung zur Messung der Gewichtskraft eines Ballens (18), die eine Messeinrichtung (64) zur Erfassung einer durch die Gewichtskraft des Ballens (18) beeinflussten Messgröße aufweist,
**dadurch gekennzeichnet, dass** die Messeinrichtung (64) eingerichtet ist, die Gewichtskraft eines auf der Transporteinrichtung (40) angeordneten Ballens zu erfassen.

2. Maschine (10) nach Anspruch 1, **dadurch gekennzeichnet, dass** die Transporteinrichtung (40) einen verfahrbaren und/oder an einem beweglichen Gestänge angebrachten Schlitten umfasst, auf dem der Ballen aufliegt und/oder einen Greifer, einen Fördergurt oder Förderwalzen aufweist.

3. Maschine (10) nach Anspruch 1 oder 2, **dadurch gekennzeichnet, dass** sich die Transporteinrichtung (40) durch Abstützelemente (60) an einer mit der Maschine (10) verbundenen Abstützeinrichtung (62) abstützt, dass die Abstützelemente (60) sich bei einer Bewegung der Transporteinrichtung (40) gegenüber der Abstützeinrichtung (62) bewegen, und dass die Messeinrichtung (64) zwischen der Abstützeinrichtung (62) und der Maschine (10) angeordnet ist.

4. Maschine (10) nach Anspruch 3, **dadurch gekennzeichnet, dass** sich die Abstützeinrichtung (62) nur über einen Teilbereich (72) des Bewegungsbereichs der Transporteinrichtung (40) erstreckt.

5. Maschine (10) nach Anspruch 3, **dadurch gekennzeichnet, dass** sich die Abstützeinrichtung (62) über den gesamten Bewegungsbereich der Transporteinrichtung (40) erstreckt.

6. Maschine (10) nach einem der Ansprüche 3 bis 5, **dadurch gekennzeichnet, dass** die Messeinrichtung (64) eingerichtet ist, die von der Transporteinrichtung (40) und dem darauf befindlichen Ballen (18) auf die Abstützeinrichtung (62) ausgeübte Gewichtskraft zu erfassen.

7. Maschine (10) nach einem der Ansprüche 3 bis 5, **dadurch gekennzeichnet, dass** die Abstützeinrichtung (62) um eine horizontale Achse (66) schwenkbar an der Maschine (10) gelagert ist und dass die Messeinrichtung (64) eingerichtet ist, ein von der Transporteinrichtung (40) und dem darauf befindlichen Ballen (18) auf die Abstützeinrichtung (62) ausgeübtes Drehmoment zu erfassen.

## Claims

1. A machine for forming and/or processing bales (18), comprising:
a compaction chamber (12) in which bales (18) of harvested crop can be produced,
a device (16) for wrapping the bales (18),
a transport device (40) for transporting the bales (18) within the machine (10), movable between a bale receiving position, in which it receives a bale (18) formed in the compaction chamber, and a bale wrapping position,
and a device for measuring the weight of a bale (18) which comprises a measuring device (64) for detecting a measured quantity influenced by the weight of the bale (18),
**characterized in that** the measuring device (64) is arranged to detect the weight of a bale disposed on the transport device (40).

2. A machine (10) according to claim 1, **characterized in that** the transport device (40) comprises a carriage which can be traversed and/or is fitted on a movable linkage, on which the bale rests, and/or a gripper, a conveyor belt or conveyor rollers.

3. A machine (10) according to claim 1 or 2, **characterized in that** the transport device (40) is supported by support elements (60) on a support device (62) connected to the machine (10), **in that** the support elements (60) move relative to the support device (62) during movement of the transport device (40), and **in that** the measuring device (64) is arranged between the support device (62) and the machine (10).

4. A machine (10) according to claim 3, **characterized in that** the support device (62) extends over a partial region (72) only of the range of movement of the transport device (40).

5. A machine (10) according to claim 3, **characterized in that** the support device (62) extends over the whole range of movement of the transport device (40).

6. A machine (10) according to any of claims 3 to 5, **characterized in that** the measuring device (64) is arranged to detect the weight imposed on the support device (62) by the transport device (40) and the bale (18) present thereon.

7. A machine (10) according to any of claims 3 to 5, **characterized in that** the support device (62) is mounted pivotally about a horizontal axis (66) on the machine (10) and **in that** the measuring device (64) is arranged to detect a moment exerted on the support device (62) by the transport device (40) and the bale (18) present thereon.

## Revendications

1. Machine (10) destinée à la formation et/ou au traitement de balles (18), comportant :
- une chambre de compactage (12) dans laquelle sont formées les balles (18) à partir des végétaux récoltés,
- un dispositif (16) destiné à l'enrubannage des balles (18),
- un dispositif de transport (40) destiné à transporter les balles (18) à l'intérieur de la machine (10), lequel peut être déplacé entre une position de réception des balles, dans laquelle il reçoit une balle (18) formée dans la chambre de compactage, et une position d'enrubannage des balles,
- et un dispositif destiné à mesurer le poids d'une balle (18), qui comporte une unité de mesure (64) destinée à enregistrer une valeur de mesure influencée par le poids de la balle (18),
**caractérisée en ce que** l'unité de mesure (64) est conçue pour détecter le poids d'une balle disposée sur le dispositif de transport (40).

2. Machine (10) selon la revendication 1, **caractérisée en ce que** le dispositif de transport (40) comporte un chariot apte à se déplacer et/ou fixé à une tringlerie mobile, sur lequel est disposée la balle, et/ou comporte un élément de préhension, une courroie de transport ou des cylindres de transport.

3. Machine (10) selon la revendication 1 ou 2, **caractérisée en ce que** le dispositif de transport (40) prend appui par l'intermédiaire d'éléments d'appui (60) sur un dispositif de support (62), relié à la machine (10), **en ce que** les éléments d'appui (60), lors d'un mouvement du dispositif de transport (40), se déplacent par rapport au dispositif de support (62), et **en ce que** l'unité de mesure (64) est disposée entre le dispositif de support (62) et la machine (10).

4. Machine (10) selon la revendication 3, **caractérisée en ce que** le dispositif de support (62) s'étend seulement sur une partie (72) de la zone de déplacement du dispositif de transport (40).

5. Machine (10) selon la revendication 3, **caractérisée en ce que** le dispositif de support (62) s'étend sur toute la zone de déplacement du dispositif de transport (40).

6. Machine (10) selon l'une quelconque des revendications 3 à 5, **caractérisée en ce que** l'unité de mesure (64) est conçue pour détecter le poids que le dispositif de transport (40) et la balle (18), posée sur celui-ci, exercent sur le dispositif de support (62).

7. Machine (10) selon l'une quelconque des revendications 3 à 5, **caractérisée en ce que** le dispositif de support (62) est monté sur la machine (10) de manière à pouvoir pivoter autour d'un axe horizontal (66) et **en ce que** l'unité de mesure (64) est conçue pour détecter un couple de rotation que le dispositif de transport (40) et la balle (18), posée sur celui-ci, exercent sur le dispositif de support (62).
